# EUROPÄISCHE PATENTANMELDUNG

(11) **EP 1 298 449 A2**
(43) Veröffentlichungstag der Anmeldung: **02.04.2003**
(21) Anmeldenummer: 02020915.1
(22) Anmeldetag: 19.09.2002
(51) Int. Cl.: G01S 7/497, G01S 7/484

(54) **Optischer Sensor**

(30) Priorität: 21.09.2001 DE 10146599
(71) Anmelder: Leuze electronic GmbH + Co., 73277 Owen/Teck (DE)
(72) Erfinder: Schönhaar, Jürgen, 72669 Unterensingen (DE); Quapil, Gerald, Dr., 73277 Owen/Teck (DE); Grass, Dietmar, 72639 Neuffen (DE); Hess, Ralf, 72639 Neuffen (DE); Reusch, Bernd, 73277 Owen/Teck (DE)
(74) Vertreter: Ruckh, Rainer Gerhard, Dr.

(57) **Zusammenfassung**

Die Erfindung betrifft einen optischen Sensor (100) mit einem Sendelichtimpulse (101) emittierenden Sender (102), welcher von einer Ansteuerschaltung (1) angesteuert ist, und mit einem Empfangslichtimpuls (103) empfangenden Empfänger (104). Die Ansteuerschaltung (1) weist eine einkanalige, fehlersichere Anschaltung zur Ansteuerung von Schaltmitteln auf, mittels derer die Sendelichtimpulse (101) generiert werden.

## Beschreibung

Die Erfindung betrifft einen optischen Sensor gemäß dem Oberbegriff des Anspruchs 1.

Derartige optische Sensoren können als Lichttaster ausgebildet sein. Die Detektion von Objekten in einem Überwachungsbereich erfolgt dann durch eine Amplitudenbewertung der Empfangssignale am Ausgang des Empfängers.

Alternativ können derartige optische Sensoren als Distanzsensoren ausgebildet sein, wobei die Distanzmessung nach dem Lichtlaufzeitverfahren oder nach dem Triangulationsprinzip erfolgen kann.

Die Sender derartiger optischer Sensoren sind typischerweise von Laserdioden gebildet. Aus Gründen der Augensicherheit ist es bei derartigen Sensoren notwendig, die ausgesandte Laserleistung zu begrenzen, so dass die Anforderungen hinsichtlich vorgegebener Laserschutzklassen, insbesondere der Laserschutzklassen 2 oder 3 A, erfüllt werden.

Dabei werden bevorzugt von dem als Laserdiode ausgebildeten Sender Sendelichtstrahlen nicht in einem kontinuierlichen Betrieb, sondern als einzelne Pulsfolgen von Sendelichtimpulsen emittiert. Dies hat den Vorteil, dass die einzelnen Sendelichtimpulse im Vergleich zum Dauerbetrieb erhöhte Lichtleistungen aufweisen können, da auf die Sendelichtimpulse jeweils eine Sendepause folgt, in welcher keine Strahlungsbelastung auftritt. Dennoch müssen auch im Pulsbetrieb des Senders Maßnahmen zur Begrenzung der Sendleistung des Senders getroffen werden.

Hierzu können prinzipiell schnelle Regelsysteme zur Regelung der Sendeleistung eingesetzt werden, die die Licht-Leistungen der einzelnen Sendelichtimpulse auf vorgegebene Sollwerte regeln. Diese Regelsysteme sind jedoch unerwünscht aufwendig und teuer. Zudem sind die Regelsysteme selbst störanfällig, wodurch die Betriebssicherheit des optischen Sensors gefährdet sein kann.

Der Erfindung liegt die Aufgabe zugrunde einen optischen Sensor der eingangs genannten Art so auszubilden, dass dieser bei möglichst geringem konstruktivem Aufwand eine möglichst hohe Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor weist einen Sendelichtimpulse emittierenden Sender, welcher von einer Ansteuerschaltung angesteuert ist, und einen Empfangslichtimpulse empfangenden Empfänger auf. Die Ansteuerschaltung weist eine einkanalige, fehlersichere Anschaltung zur Ansteuerung von Schaltmitteln auf, mittels derer die Sendelichtimpulse generiert werden.

Durch die einkanalige Struktur der Anschaltung wird mit geringen konstruktivem Aufwand die gewünschte Fehlersicherheit der Ansteuerschaltung erhalten.

Vorzugsweise weist die Ansteuerschaltung einen einfehlersicheren Aufbau auf. Bei einfehlersicheren Systemen gemäß der Norm DIN VDE 801 erfolgt eine Aufdeckung eines ersten Fehlers in Schaltungssystemen, nicht jedoch von Folgefehlern, die durch den Erstfehler bewirkt werden.

In einer vorteilhaften Ausführungsform der Erfindung sind als Schaltmittel zwei Schalter vorgesehen, welche zur Generierung der Sendelichtimpulse dienen, wobei der Sender von einer Laserdiode gebildet ist.

Während einer Sendepause wird zunächst der erste Schalter eingeschaltet, wodurch die Laserleistung der Laserdiode auf einen Wert dicht oberhalb der Laserschwelle geregelt wird. Zur Auslösung des auf die Sendepause folgenden Sendelichtimpulses wird bei eingeschaltetem ersten Schalter der zweite Schalter eingeschaltet. Dadurch wird in die Laserdiode ein die Pulsleistung des Sendelichtimpulses bestimmender Stromimpuls eingespeist. Zum Beenden des Sendelichtimpulses werden die Schalter ausgeschaltet.

Durch die Steuerung des Sendebetriebs der Laserdiode mittels der beiden Schalter ergeben sich bei dem Betrieb des Senders insgesamt drei verschiedene Zustände.

Während einer Sendepause sind zunächst beide Schalter ausgeschaltet. In diesem ersten Zustand wird von der Laserdiode kein Laserlicht emittiert. Zum Übergang in den zweiten Zustand wird während der Sendepause nur der erste Schalter eingeschaltet. Mittels der dadurch aktivierten Regelung wird die Laserleistung auf einen Wert dicht oberhalb der Laserschwelle geregelt. Dabei erfolgt das Einschalten des ersten Schalters rechtzeitig vor der Auslösung des jeweiligen Sendelichtimpulses, so dass mittels einer langsamen Regelung die Laserleistung auf den gewünschten Sollwert geregelt werden kann. Vorzugsweise ist die Dauer dieses ersten Zustandes erheblich größer als die Pulsdauer des Sendelichtimpulses, jedoch kleiner als die Sendepause selbst.

Durch die langsame Einregelung auf den Sollwert während des zweiten Zustandes wird eine exakte Einregelung auf den Thresholdwert des Lasers erhalten, obwohl der Thresholdstrom alterungs- und temperaturabhängig ist.

Besonders vorteilhaft hierbei ist, dass die Laserleistung, die bei dicht oberhalb der Laserschwelle betriebenem Laser emittiert wird, für die Augensicherheit vernachlässigbar ist, d.h. nicht zu einer Gefährdung von Personen führt.

Der Übergang in den dritten Zustand erfolgt dadurch, dass zusätzlich zum ersten Schalter auch der zweite Schalter eingeschaltet wird. Dadurch erfolgt die Auslösung des Sendelichtimpulses, d.h. die Sendepause wird beendet.

Zwar wird der Strom der Laserdiode durch Einschalten des Schalters ungeregelt erhöht. Da die Pulsdauer des Sendelichtimpulses jedoch hinreichend kurz gewählt ist, ist die während der Dauer des Sendelichtimpulses emittierende Strahlungsleistung unkritisch für das menschliche Auge.

Da die Laserdiode vor Auslösen des Sendelichtimpulses bereits auf ihren Thresholdwert eingeregelt wurde, werden durch Einschalten des zweiten Schalters sehr steile und reproduzierbare Pulsflanken der Sendelichtimpulse erhalten. Damit kann die Pulsdauer und letztlich auch die Strahlungsleistung der Laserdiode exakt und reproduzierbar vorgegeben werden, was eine wesentliche Voraussetzung für die Anforderungen der einzuhaltenden Laserschutzklassen ist.

Die Ansteuerschaltung weist eine einkanalig aufgebaute Rechnereinheit auf, mittels derer eine Funktionsüberprüfung der Ansteuerschaltung zur Gewährleistung der gewünschten Fehlersicherheit erfolgt.

Dabei werden in der Rechnereinheit fortlaufend die Ausgangssignale zweier Monitordioden verglichen, in welche jeweils ein definierter Teil des zu der Laserdiode emittierten Laserlichts eingekoppelt wird. Auf diese Weise ist der von der Laserdiode gebildete Sender überprüfbar.

Die Ausgangssignale der ersten Monitordiode werden zudem in eine Reglereinheit eingespeist, die zur Regelung der Laserdiode auf dem Thresholdwert bei geschlossenem Schalter dient. Durch die Ankopplung ist ein kontrollierter Betrieb der Reglereinheit gewährleistet.

Weiterhin wird während des Fertigungsprozess des optischen Sensors ein in-circuit-test durchgeführt, mittels dessen Komponenten der Ansteuerschaltung auf ihre Funktion hin überprüfbar sind.

Schließlich ist die Rechnereinheit selbst mittels eines Watchdogs überprüfbar.

Durch die Gesamtheit dieser Maßnahmen wird bei einkanaligem Aufbau der gesamten Ansteuerschaltung das gewünschte Sicherheitsniveau, insbesondere eine Einfehlersicherheit der Ansteuerschaltung erhalten.

Die Erfindung wird im Nachstehenden anhand der Zeichnung erläutert. Es zeigt:
- Figur 1:: Schematische Darstellung eines optischen Sensors.
- Figur 2:: Blockschaltbild der Ansteuerschaltung eines optischen Sensors gemäß Figur 1.

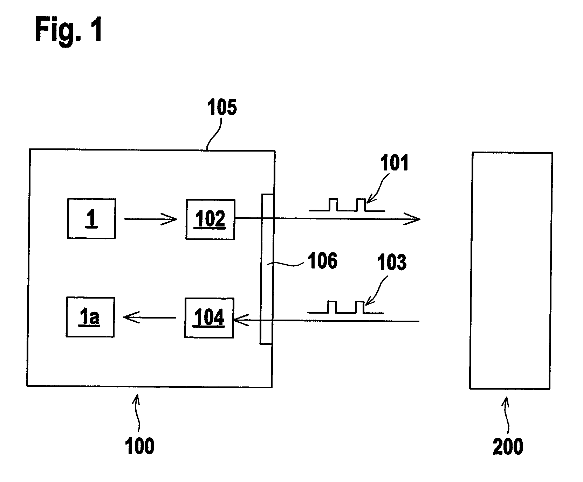

Figur 1 zeigt schematisch den Aufbau eines optischen Sensors 100 zur Erfassung von Objekten 200 in einem Überwachungsbereich. Der optische Sensor 100 kann von einem Lichttaster, Distanzsensor oder dergleichen gebildet sein. Der optische Sensor 100 weist einen Sendelichtimpulse 101 emittierenden Sender 102 und einen Empfangslichtimpulse 103 empfangenden Empfänger 104 auf, die in einem gemeinsamen Gehäuse 105 integriert sind.

Die Sendelichtimpulse 101 und Empfangslichtimpulse 103 sind durch ein Fenster 106 in der Frontwand des Gehäuses 105 geführt. Die auf ein im Überwachungsbereich angeordnetes Objekt 200 auftreffenden Sendelichtimpulse 101 werden von diesem als Empfangslichtimpulse 103 zum Empfänger 104 zurückreflektiert. Der Empfänger 104 besteht aus einer Photodiode oder dergleichen.

Der Sender 102 ist an eine Ansteuerschaltung 1 angeschlossen, welche zur Generierung der Sendelichtimpulse 101 dient. Vorzugsweise werden mittels der Ansteuerschaltung 1 Sendelichtimpulse 101 generiert, deren Pulsfolgefrequenzen im Bereich zwischen 1 Hz und 10 KHz liegen. Die Sendelichtimpulse 101 weisen bevorzugt eine Pulsdauer im Bereich zwischen 10 n sec und 100 µ sec auf.

Der Empfänger 104 ist an eine Auswerteeinheit 1a angeschlossen, welche prinzipiell eine Baueinheit mit der Ansteuerschaltung 1 bilden kann.

In der Auswerteeinheit 1 a wird aus den Ausgangssignalen des Empfängers 104 ein Objektfeststellungssignal generiert. Für den Fall, dass der optische Sensor 100 als Distanzsensor ausgebildet ist, wird als Objektfeststellungssignal von der Auswerteeinheit 1 a ein Distanzwert ausgegeben. Für den Fall, dass der optische Sensor 100 als Lichttaster ausgebildet ist, wird von der Auswerteeinheit 1a ein binäres Objektfeststellungssignal ausgegeben, dessen Schalterzustände angeben, ob sich ein Objekt 200 im Überwachungsbereich befindet oder nicht.

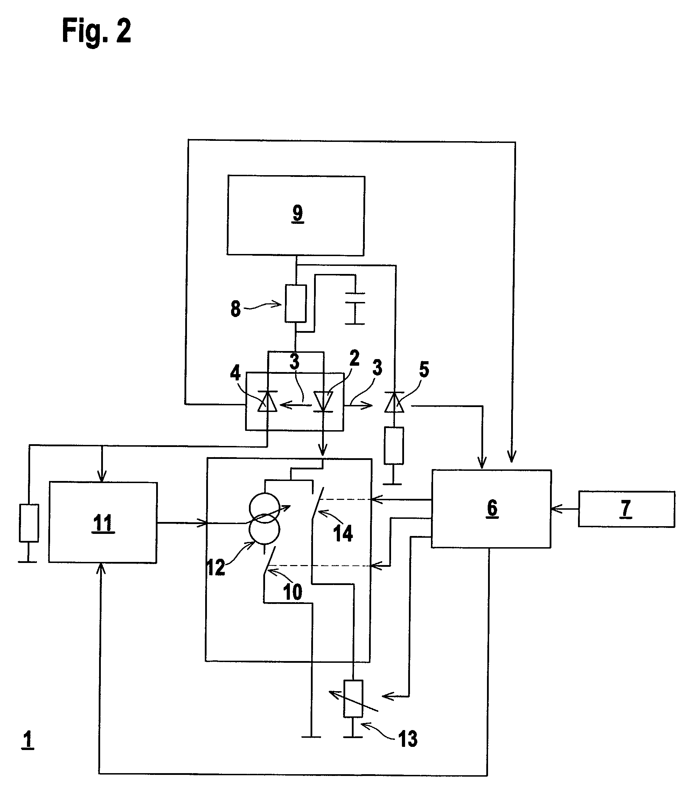

Figur 2 zeigt den Aufbau der Ansteuerschaltung 1 für den optischen Sensor gemäß Figur 1. Die Ansteuerschaltung 1 dient zur Ansteuerung des Senders 102, der im vorliegenden Fall von einer Laserdiode 2 gebildet ist. Mit der Ansteuerschaltung 1 werden aus dem von der Laserdiode 2 emittierten Laserlicht 3 die Sendelichtimpulse 101 generiert. Zudem wird ein vorgegebener Teil des vom Laser 2 emittierten Laserlichts 3 jeweils in eine erste Monitordiode 4 und eine zweite Monitordiode 5 eingekoppelt. Die erste Monitordiode 4 bildet eine Baueinheit mit dem Laser 2. In die zweite Monitordiode 5 wird Laserlicht 3 vom Laser 2 über nicht dargestellte Umlenkmittel eingekoppelt. Die Umlenkmittel können beispielsweise von einem diffraktiven Strahlteiler oder einem Prisma gebildet sein. Weiterhin können die Umlenkmittel von einer Kollimatorlinse oder einer Glasscheibe gebildet sein, welche das Gehäuse 105 des optischen Sensors 100 abschließt. In einer alternativen Ausführungsform können beide Monitordioden 4, 5 mit der Laserdiode 2 eine Baueinheit bilden.

Die Ausgangssignale der Monitordioden 4, 5 werden in eine Rechnereinheit 6 eingelesen, die von einem Watchdog 7 gesteuert ist.

Der Laser 2 ist über ein RC-Glied 8 an eine Spannungsversorgung 9, insbesondere ein Netzteil, angeschlossen.

Der Laser 2 ist über einen Schalter 10 an eine Reglereinheit anschließbar, die einen Regler 11 und eine daran angeschlossene steuerbare Stromquelle 12 aufweist. Die Ausgangssignale der ersten Monitordiode 4 werden in den Regler 11 eingespeist.

Ein einstellbarer Widerstand 13 ist über einen zweiten Schalter 14 dem Laser 2 zuschaltbar. Die Schalter 10,14 und der einstellbare Widerstand 13 werden von der Rechnereinheit 6 gesteuert.

Die Schalter 10, 14 bilden Schaltmittel, die über die Rechnereinheit 6 betätigt werden und mittels derer die Sendelichtimpulse 101 generiert werden. In den Sendepausen des Senders 102 sind beide Schalter 10, 14 zunächst ausgeschaltet, d.h. geöffnet. Vor Aussenden eines Sendelichtimpulses 101 wird noch während einer Sendepause nur der erste Schalter 10 eingeschaltet, d.h. geschlossen.

Durch das Schließen des ersten Schalters 10 wird die Stromquelle 12, die über den Regler 11 in Abhängigkeit der Ausgangssignale der ersten Monitordiode 4 geregelt ist, der Laserdiode 2 zugeschaltet, so dass deren Laserleistung auf einen Wert dicht oberhalb der Schwelle (Threshold) geregelt wird.

Das Auslösen des Sendelichtimpulses 101, d.h. das Beenden der Sendepause erfolgt durch zusätzliches Einschalten, d.h. Schließen des zweiten Schalters 14.

Dadurch wird der einstellbare Widerstand 13 der Laserdiode 2 zugeschaltet, wodurch der Strom der Laserdiode 2 ungeregelt erhöht wird.

Der Sendelichtimpuls 101 wird schließlich dadurch beendet, dass beide Schalter 10, 14 wieder geöffnet werden. In einer vorteilhaften Abwandlung wird die Laserdiode 2 über den zweiten Schalter 14 hochfrequent moduliert, um Fremdlichteinflüsse auf den Monitordioden 4, 5 zu minimieren. Die Modulationsfrequenz liegt weit oberhalb von 1 MHz und liegt damit oberhalb der üblichen Fremdlichtfrequenzen. Die Ausgangssignale der Monitordioden 4, 5 werden mittels eines Hochpasses gefiltert und dann demoduliert.

Durch geeignete Vorgabe des Puls- Pausenverhältnisses der Sendelichtimpulse 101 ist trotz des ungeregelten Betriebs der Laserdiode 2 bei Emission der Sendelichtimpulse 101 gewährleistet, dass die Anforderungen der einschlägigen Laserklassen zur Gewährleistung der Augensicherheit des optischen Sensors 100 eingehalten werden.

Zudem sind bei dem optischen Sensor 100 Maßnahmen zur Fehlererkennung vorgesehen, durch welche die erforderliche Kategorie der Fehlersicherheit des optischen Sensors, im vorliegenden Fall der Einfehlersicherheit gemäß DIN VDE 801, gewährleistet ist.

Zu diesen Maßnahmen gehört ein in-circuit-test, der während des Fertigungsprozesses des optischen Sensors 100 durchgeführt wird. Bei dem in-circuit-test werden Komponenten der Ansteuerschaltung 1 vermessen, wodurch überprüfbar ist, ob deren Betriebsparameter innerhalb der vorgegebenen Spezifikationen liegen.

Als weitere Maßnahme zur Erzielung der gewünschten Fehlersicherheit wird die Laserleistung der Laserdiode 2 durch das RC-Glied 8 begrenzt. Falls im Fehlerfall, insbesondere bei Fehlfunktionen der Schalter 10, 14 die Laserdiode 2 Dauerlicht emittiert, wird durch eine geeignete Dimensionierung des RC-Glieds 8 erreicht, dass der maximal mögliche Dauerstrom für die Laserdiode 2 begrenzt ist, so dass dieser unterhalb des Wertes für die Laserschwelle (Threshold) liegt.

Während des Betriebs des optischen Sensors 100 erfolgt über die Rechnereinheit 6 eine fortlaufende Überprüfung der Komponenten der Ansteuerschaltung 1. Insbesondere werden die Monitordioden 4, 5 dadurch überwacht, dass deren Ausgangssignale in der Rechnereinheit 6 fortlaufend verglichen werden.

Zudem werden die Ausgangssignale der Monitordioden 4, 5 mit Referenzwerten verglichen, die in der Rechnereinheit 6 abgespeichert sind. Die Referenzwerte werden zweckmäßigerweise während des Fertigungsprozesses des optischen Sensors 100 ermittelt und in die Rechnereinheit 6 eingelesen.

Weiterhin wird über die Rechnereinheit 6 überprüft, ob die vorgegebenen Werte für die Pulsdauer und Pulsfrequenzen der Sendelichtimpulse 101, die in der Rechnereinheit 6 als Parameterwerte abgespeichert sind, eingehalten werden.

Wird in der Rechnereinheit 6 eine Fehlfunktion festgestellt, wird über diese aus Sicherheitsgründen die Laserdiode 2 abgeschaltet.

Die Rechnereinheit 6 selbst wird über den Watchdog 7 überprüft. Hierzu werden von der Rechnereinheit 6 zyklisch Signale gesendet. Bei einem Fehler in der Rechnereinheit 6 bleiben diese Signale aus, so dass dann die Rechnereinheit 6 über den Watchdog 7 abgeschaltet wird.

### Bezugszeichenliste

- (1): Ansteuerschaltung
- (1a): Auswerteeinheit
- (2): Laserdiode
- (3): Laserlicht
- (4): Monitordiode
- (5): Monitordiode
- (6): Rechnereinheit
- (7): Watchdog
- (8): RC-Glied
- (9): Spannungsversorgung
- (10): Schalter
- (11): Regler
- (12): Stromquelle
- (13): Widerstand
- (14): Schalter

- (100): Optischer Sensor
- (101): Sendelichtimpulse
- (102): Sender
- (103): Empfangslichtimpulse
- (104): Empfänger
- (105): Gehäuse
- (106): Fenster

## Patentansprüche

1. Optischer Sensor mit einem Sendelichtimpulse emittierenden Sender, welcher von einer Ansteuerschaltung angesteuert ist, und mit einem Empfangslichtimpulse empfangenden Empfänger, **dadurch gekennzeichnet, dass** die Ansteuerschaltung (1) eine einkanalige, fehlersichere Anschaltung zur Ansteuerung von Schaltmitteln aufweist, mittels derer die Sendelichtimpulse (101) generiert werden.

2. Optischer Sensor nach Anspruch 1, **dadurch gekennzeichnet, dass** die Ansteuerschaltung (1) eine einfehlersichere, einkanalige Anschaltung aufweist.

3. Optischer Sensor nach einem der Ansprüche 1 oder 2, **dadurch gekennzeichnet, dass** der Sender (102) von einer Laserdiode (2) gebildet ist.

4. Optischer Sensor nach Anspruch 3, **dadurch gekennzeichnet, dass** die Ansteuerschaltung (1) als Schaltmittel zwei Schalter (10, 14) aufweist, wobei zur Generierung eines Sendelichtimpulses (101) während einer Sendepause der erste Schalter (10) eingeschaltet wird, wodurch die Laserleistung mittels der Ansteuerschaltung (1) auf einen Wert oberhalb der Laserschwelle geregelt wird, dass zur Auslösung des Sendelichtimpulses (101) bei eingeschaltetem ersten Schalter (10) der zweite Schalter (14) eingeschaltet wird, wodurch in die Laserdiode (2) ein die Pulsleistung des Sendelichtimpulses (101) bestimmender Stromimpuls eingespeist wird, und dass zum Beenden des Sendelichtimpulses (101) die Schalter (10, 14) ausgeschaltet werden.

5. Optischer Sensor nach Anspruch 4, **dadurch gekennzeichnet, dass** der Laserdiode (2) über den ersten Schalter (10) eine Reglereinheit bestehend aus einem Regler (11) und einer über den Regler (11) steuerbaren Stromquelle (12) zuschaltbar ist.

6. Optischer Sensor nach Anspruch 5, **dadurch gekennzeichnet, dass** die steuerbare Stromquelle (12) vom Regler (11) in Abhängigkeit der Ausgangssignale einer ersten Monitordiode (4) angesteuert ist, wobei diese der Laserdiode (2) derart zugeordnet ist, dass ein bestimmter Teil des von der Laserdiode (2) emittierenden Laserlichts (3) auf die Monitordiode (4) trifft.

7. Optischer Sensor nach einem der Ansprüche 5 oder 6, **dadurch gekennzeichnet, dass** der Laserdiode (2) über den zweiten Schalter (14) ein einstellbarer Widerstand (13) zuschaltbar ist.

8. Optischer Sensor nach einem der Ansprüche 1 - 7, **dadurch gekennzeichnet, dass** die Pulsfrequenz der Sendelichtimpulse (101) im Bereich zwischen 1 Hz und 10 KHz liegt.

9. Optischer Sensor nach einem der Ansprüche 1 - 8, **dadurch gekennzeichnet, dass** die Pulsdauer eines Sendelichtimpulses (101) im Bereich zwischen 10 n sec und 100 µ sec liegt.

10. Optischer Sensor nach Anspruch 5, **dadurch gekennzeichnet, dass** die Ansteuerschaltung (1) eine Rechnereinheit (6) aufweist, über welche die Schalter (10, 14) betätigbar sind.

11. Optischer Sensor nach Anspruch 10, **dadurch gekennzeichnet, dass** mittels der Rechnereinheit (6) eine Funktionsüberprüfung von Komponenten der Ansteuerschaltung (1) erfolgt.

12. Optischer Sensor nach einem der Ansprüche 10 oder 11, **dadurch gekennzeichnet, dass** während dessen Fertigungsprozess ein in-circuit-test zur Vermessung von Einzelkomponenten der Ansteuerschaltung (1) erfolgt.

13. Optischer Sensor nach einem der Ansprüche 11 oder 12, **dadurch gekennzeichnet, dass** zur Funktionsüberprüfung der Ansteuerschaltung (1) eine zweite Monitordiode (5) vorgesehen ist, welche der Laserdiode (2) so zugeordnet ist, dass auf diese ein definierter Teil des von der Laserdiode (2) emittierten Laserlichts (3) trifft, und dass die Ausgangssignale beider Monitordioden (4, 5) in der Rechnereinheit (6) fortlaufend miteinander verglichen werden.

14. Optischer Sensor nach Anspruch 13, **dadurch gekennzeichnet, dass** die Ausgangssignale der Monitordioden (4, 5) mit in der Rechnereinheit (6) abgespeicherten Referenzwerten verglichen werden, und dass bei Abweichungen der Ausgangssignale von den Referenzwerten ein Abschalten der Laserdiode (2) erfolgt.

15. Optischer Sensor nach Anspruch 14, **dadurch gekennzeichnet, dass** während dessen Fertigungsprozess zur Ermittlung der Referenzwerte Referenzmessungen durchgeführt werden.

16. Optischer Sensor nach Anspruch 15, **dadurch gekennzeichnet, dass** mittels der Rechnereinheit (6) die Einschaltung der vorgesehenen Werte für die Pulsdauer und Pulsfrequenzen der Sendelichtimpulse (101) überprüft wird.

17. Optischer Sensor nach einem der Ansprüche 15 oder 16, **dadurch gekennzeichnet, dass** bei einer mittels der Rechnereinheit (6) aufgedeckten Fehlfunktion über diese die Laserdiode (2) abgeschaltet wird.

18. Optischer Sensor nach einem der Ansprüche 10 - 17, **dadurch gekennzeichnet, dass** der Rechnereinheit (6) ein Watchdog (7) zugeordnet ist, über welchen die Rechnereinheit (6) im Fehlerfall abschaltbar ist.

19. Optischer Sensor nach einem der Ansprüche 3 - 18, **dadurch gekennzeichnet, dass** der Laserdiode (2) zu deren Leistungsbegrenzung ein RC-Glied (8) zugeordnet ist.

20. Optischer Sensor nach Anspruch 19, **dadurch gekennzeichnet, dass** die Dimensionierung des RC-Gliedes (8) so gewählt ist, dass während eines durch Fehler in der Ansteuerschaltung (1) verursachten Dauerbetriebs der Laserdiode (2) der dieser zugeführte Strom auf einen Wert unterhalb der Laserschwelle begrenzt ist.

21. Optischer Sensor nach einem der Ansprüche 3 - 10, **dadurch gekennzeichnet, dass** zur Unterdrückung von Fremdeinflüssen die Laserdiode (2) hochfrequent moduliert ist.

22. Optischer Sensor (100) nach einem der Ansprüche 13 - 21, **dadurch gekennzeichnet, dass** die Laserdiode (2) und die erste Monitordiode (4) eine Baueinheit bilden, und dass über Umlenkmittel Laserlicht (3) von der Laserdiode (2) in die zugeordnete zweite Monitordiode (5) eingekoppelt wird.

23. Optischer Sensor nach Anspruch 22, **dadurch gekennzeichnet, dass** die Umlenkmittel von einem diffraktiven Strahlteiler oder einem Prisma gebildet sind.

24. Optischer Sensor nach Anspruch 22, **dadurch gekennzeichnet, dass** das von der Laserdiode (2) emittierte Laserlicht (3) über Segmente einer das Gehäuse (105) des Sensors abschließenden Glasscheibe oder einer der Laserdiode (2) nachgeordneten Kollimator-Linse ausgekoppelt und der zweiten Monitordiode (5) zugeführt wird.

25. Optischer Sensor nach einem der Ansprüche 13 - 21, **dadurch gekennzeichnet, dass** die Laserdiode (2) und beide Monitordioden (4, 5) eine Baueinheit bilden.
